## Europäisches Patentamt
## European Patent Office
## Office européen des brevets

(11) Veröffentlichungsnummer: **0 476 477 A1**

## EUROPÄISCHE PATENTANMELDUNG

(21) Anmeldenummer: **91115220.5**

(22) Anmeldetag: **09.09.91**

(51) Int. Cl.5: **G01N 27/416**, G03F 7/32

(30) Priorität: **15.09.90 DE 4029321**

(43) Veröffentlichungstag der Anmeldung:
**25.03.92 Patentblatt 92/13**

(84) Benannte Vertragsstaaten:
**AT BE CH DE FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Steiner, Ingo, Dr. Dipl.-Chem.**
**Hochheimer Strasse 10**
**W-6228 Eltville(DE)**

(54) Verfahren und Vorrichtung zur Bestiummung des pH-Wertes von Flüssigkeiten.

(57) Eine Meßvorrichtung besteht aus einem Außengefäß 1, das mit einer Elektrolytlösung 4 gefüllt ist, die über einen Zulauf 2 und einen Ablauf 3 im Kreislauf durch einen Thermostaten 13 geführt ist, der die erforderliche Temperaturkonstanz der Elektrolytlösung sicherstellt. In die Elektrolytlösung 4 tauchen eine Referenzzelle 5 mit der Referenzlösung 20 und eine Meßzelle 6 mit der Meßlösung 21 ein, in welchen Zellen sich Glaselektroden 9,10 befinden. Die Meßzelle 6 und die Referenzzelle 5 sind über je ein Diaphragma 8 bzw. 7 elektrisch mit der Elektrolytlösung 4 in Verbindung. In die Elektrolytlösung 4 ragt eine Metallelektrode 11 hinein, die auf Masse liegt. In der Referenzzelle 5 ist mittig eine Referenzelektrode 9 und in der Meßzelle 6 eine Meßelektrode 10 mittig angeordnet. Die beiden Elektroden sind an eine Verstärkerschaltung angeschlossen.

EP 0 476 477 A1

Rank Xerox (UK) Business Services

Die Erfindung betrifft ein Verfahren zur Bestimmung des pH-Wertes von Flüssigkeiten durch eine pH-Differenzmessung an einer Meßlösung sowie eine Vorrichtung zur Bestimmung des pH-Wertes von Flüssigkeiten.

Eine Messung des absoluten pH-Wertes ist derzeit mit einer Genauigkeit von etwa 0,01 pH möglich. Dies gilt insbesondere bei Messungen von alkalischen Lösungen, da die dabei verwendeten Glaselektroden einen Alkalifehler von 0,05 pH, beispielsweise in einer 0,1 N-NaOH-Lösung haben, der nicht kalibrierbar ist.

Im Stand der Technik erfolgt die Bestimmung des pH-Wertes, beispielsweise mit Hilfe von Wasserstoffelektroden (Grundlagen der physikalischen Chemie, 4. Auflage, 1963, Verfasser: Brdicka, S. 626). Hierzu wird das Potential einer Wasserstoffelektrode in einer Lösung von beliebigem pH-Wert mit Hilfe einer Bezugselektrode bestimmt. Um das Diffusionspotential an der Grenzfläche verschiedenartiger Elektrolyten auf das geringste Maß herabzusetzen, werden die Elektrodenlösungen durch eine Brücke getrennt. Als Bezugselektrode wird z.B. eine gesättigte Kalomelelektrode benutzt. Wenn sich verschieden konzentrierte Lösungen durch eine poröse Wand, eine durchlässige Membran oder direkt berühren, so bildet sich an ihrer Grenzfläche eine elektrische Doppelschicht aus, so daß zwischen den beiden Lösungen ein Potentialgefälle entsteht. Diese elektrische Doppelschicht bildet sich infolge der Diffusion des Elektrolyten aus der konzentrierten Lösung in die verdünnte Lösung aus. Haben die Kationen und Anionen des betreffenden Elektrolyten eine unterschiedliche Beweglichkeit, so ist die beweglichere Ionenart bestrebt, bei der Diffusion schnell voranzuschreiten. Die zwischen den ungleichnamig geladenen Ionen wirkenden elektrostatischen Kräfte verhindern jedoch die unabhängige Diffusion beider Ionenarten, und so werden die beweglicheren Ionen in ihrer Diffusion durch die weniger beweglichen Ionen gehemmt, und die Diffusion der langsameren Ionen wird umgekehrt durch die beweglicheren Ionen beschleunigt. Die Tendenz der beweglicheren Ionen, schneller zu diffundieren, äußert sich darin, daß diese Ionen eine Schicht gleichnamiger Ladungen ausbilden, der eine aus den langsameren Ionen mit umgekehrter Ladung zusammengesetzte Schicht unmittelbar nachfolgt, wodurch es zu der Ausbildung einer elektrischen Doppelschicht kommt. Diese bewirkt einen Potentialsprung an der Flüssigkeitsgrenzfläche. Konzentrationsketten mit einem derartigen Potentialsprung zwischen sich berührenden Lösungen werden im allgemeinen als Konzentrationsketten mit Überführung bezeichnet (Grundlagen der physikalischen Chemie, 4. Auflage, Brdicka, S. 612). Bei der Bestimmung der elektromotorischen Kraft von Konzentrationsketten kann das Diffusionspotential an der Grenzfläche der verschieden konzentrierten Lösungen dadurch unterdrückt werden, daß die Elektrodenlösungen durch eine gesättigte Lösung von Kaliumchlorid oder Ammoniumchlorid verbunden werden. Eine derartige Verbindung wird als Brücke bezeichnet, und anstelle der einen Grenzfläche zwischen den Elektrolyten entstehen auf diese Weise zwei Grenzflächen unter weitgehender Eliminierung des Potentialgefälles zwischen den Elektrolyten.

Kalomelelektroden werden wegen ihres vollkommen reproduzierbaren Potentials als Bezugselektroden zur Bestimmung des Potentials anderer Elektroden benutzt. Zu praktischen Meßzwecken werden die Kalomelelektroden je nach Bedarf mit 0,1 N-, 1 N- oder gesättigten Kaliumchloridlösungen als Elektrolytbrücke gefüllt.

Mit den kalibrierten Bezugselektroden bzw. Kalomelelektroden und einer pH-empfindlichen Elektrode, z.B. einer Glaselektrode, können durch Vergleich mit gepufferten Standardlösungen die absoluten pH-Werte von Elektrolyten bestimmt werden.

In vielen Fällen reicht jedoch eine pH-Differenzmessung aus, bei der die zu untersuchende Lösung mit einer bekannten oder willkürlich gewählten Referenzlösung als Standard verglichen wird.

Aufgabe der Erfindung ist es, ein Verfahren und eine Vorrichtung zur Bestimmung des pH-Wertes von Flüssigkeiten durch eine pH-Differenzmessung mit einer Genauigkeit gleich/besser als 0,001 pH zu schaffen.

Diese Aufgabe wird erfindungsgemäß durch ein Verfahren in der Weise gelöst, daß die pH-Differenzmessung mittels Glaselektroden zwischen einem Volumen der Meßlösung und einem Volumen einer Referenzlösung, die eine vergleichbare Zusammensetzung wie die Meßlösung besitzt, vorgenommen wird, daß die Referenzlösung und die Meßlösung über zumindest ein Diaphragma elektrisch miteinander in Verbindung stehen, daß eine auf Masse liegende Metallelektrode den elektrischen Nullpunkt einer Meßvorrichtung bildet, und daß die Potentialdifferenz zwischen der Meß- und der Referenzlösung ein Maß für die Differenz der pH-Werte zwischen den beiden Lösungen wiedergibt.

In Ausgestaltung des Verfahrens stehen die Referenz- und die Meßlösung über je ein Diaphragma mit einer Elektrolytlösung elektrisch in Verbindung, die den elektrischen Nullpunkt der Meßvorrichtung bildet und in die die Metallelektrode eintaucht.

Das Verfahren wird in einer Weise ausgeführt, daß die Referenzlösung während der Messung nicht ausgewechselt und die Meßlösung in konstanten Zeitintervallen während der Messung ausgewechselt wird. Dabei wird die Elektrolytlösung auf konstanter Temperatur gehalten und durchströmt gleichmäßig die

EP 0 476 477 A1

Meßvorrichtung.

Eine Vorrichtung zur Bestimmung des pH-Wertes von Flüssigkeiten durch eine pH-Differenzmessung zeichnet sich dadurch aus, daß eine Referenz- und eine Meßzelle über ein Diaphragma elektrisch miteinander verbunden sind, daß jeweils eine Referenzelektrode und eine Meßelektrode in der Referenz- und der Meßzelle angeordnet sind und daß eine auf Masse liegende Metallelektrode in eine Referenzlösung in der Referenzzelle eintaucht.

Eine weitere Vorrichtung zur Bestimmung des pH-Wertes von Flüssigkeiten durch eine pH-Differenzmessung weist ein Außengefäß auf, das eine Elektrolytlösung enthält und zeichnet sich dadurch aus, daß eine Referenzzelle und eine Meßzelle in die Elektrolytlösung eintauchen, daß die Referenz- und die Meßzelle jeweils ein Diaphragma aufweisen, die den Flüssigkeitsaustausch zwischen den Flüssigkeiten in den Zellen und der Elektrolytlösung verhindern, daß jeweils eine Referenzelektrode und eine Meßelektrode in der Referenz- bzw. Meßzelle angeordnet sind und daß eine Metallelektrode, die in die Elektrolytlösung eintaucht, auf Masse liegt.

Die weitere Ausgestaltung der Vorrichtungen nach der Erfindung ergibt sich aus den Merkmalen der Ansprüche 10 bis 20.

Mit der Erfindung werden die Vorteile erzielt, daß für eine Meßgröße von 0,001 pH eine gut meßbare Potentialdifferenz von 60 $\mu$V bei Messungen ohne Überführung bzw. 20 $\mu$V bei Messungen mit Überführung erhalten wird, und daß eine Temperaturkonstanz der Vorrichtung bzw. des Verfahrens bei Verwendung von Glaselektroden von besser als 0,05 K eingehalten werden kann.

Die Erfindung wird im folgenden anhand zweier zeichnerisch dargestellten Ausführungsbeispiele näher erläutert. Es zeigen:

Figur 1    schematisch eine erste Ausführungsform der Meßvorrichtung nach der Erfindung,
Figur 2    schematisch eine zweite Ausführungsform der Meßvorrichtung nach der Erfindung, und
Figur 3    eine Verstärker- und Anzeigeschaltung als Bestandteil der Meßvorrichtung.

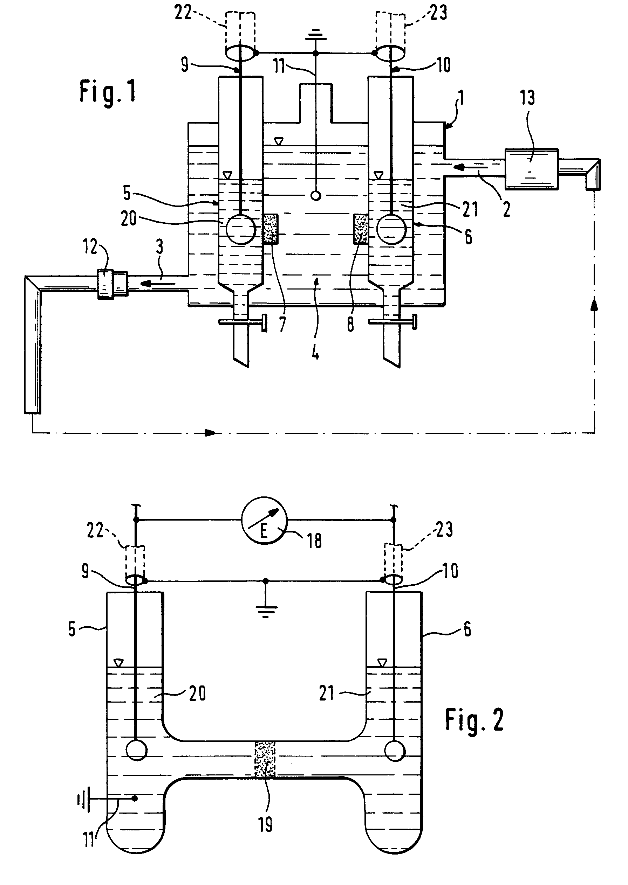

Die in Figur 1 schematisch gezeigte erste Ausführungsform einer Meßvorrichtung nach der Erfindung besteht aus einem Außengefäß 1, das eine Elektrolytlösung 4 enthält. In dem Außengefäß 1 befinden sich eine Referenzzelle 5 und eine Meßzelle 6, die in die Elektrolytlösung 4 eintauchen. Die Referenzzelle 5 und die Meßzelle 6 beinhalten handelsübliche Glaselektroden, wie sie beispielsweise die Firma Schott, Mainz, liefert. An der Referenz- und der Meßzelle befinden sich Diaphragmen 7 und 8, welche die Referenzlösung 20 und die Meßlösung 21 von der Elektrolytlösung 4 trennen. Da sich zwischen diesen beiden Lösungen noch die Elektrolytlösung befindet, wird hier von einer Meßanordnung ohne Überführung gesprochen, im Gegensatz zu der zweiten Ausführungsform nach Figur 2, bei der es sich um eine Meßanordnung mit Überführung handelt. Die Diaphragmen 7 und 8 verhindern den Flüssigkeitsaustausch zwischen den Flüssigkeiten in der Referenz- und der Meßzelle einerseits und der Elektrolytlösung 4 andererseits.

Desweiteren weist die Meßvorrichtung eine Metallelektrode 11 auf, bei der es sich bevorzugt um eine Platinelektrode handelt, die in die Elektrolytlösung 4 eintaucht und auf Masse liegt.

Die Meßanordnung ist bezüglich dieser Metallelektrode 11 symmetrisch aufgebaut. Die einzige Abweichung von dieser Symmetrie liegt in den Unterschieden zwischen der Referenzlösung 20 und der Meßlösung 21.

Das Außengefäß 1 ist mit einem Zulauf 2 und mit einem Ablauf 3 für die Elektrolytlösung 4 ausgestattet, die mittels einer Pumpe 12, die im Ablauf liegt, im Kreislauf umgepumpt wird. Kurz vor dem Zulauf 2 in das Außengefäß 1 befindet sich ein Thermostat 13, durch den die Leitung, durch welche die Elektrolytlösung 4 umgepumpt wird, hindurchgeführt ist. Der Thermostat 13 sorgt für eine weitgehende Temperaturkonstanz der Elektrolytlösung 4, die durch das Außengefäß 1 hindurchströmt.

Eine elektrische Abschirmung 22 umgibt die Referenzelektrode 9, während die Meßelektrode 10 von einer Abschirmung 23 umhüllt ist. Die beiden Abschirmungen 22, 23 sind gemeinsam mit der Metallelektrode 11 auf Masse gelegt. Über die Metallelektrode 11 ist die Elektrolytlösung 4, auch als Elektrolytschlüssel bezeichnet, auf Massepotential und bildet somit eine niederohmige elektrische Abschirmung für die Referenz- und die Meßzelle 5 bzw. 6.

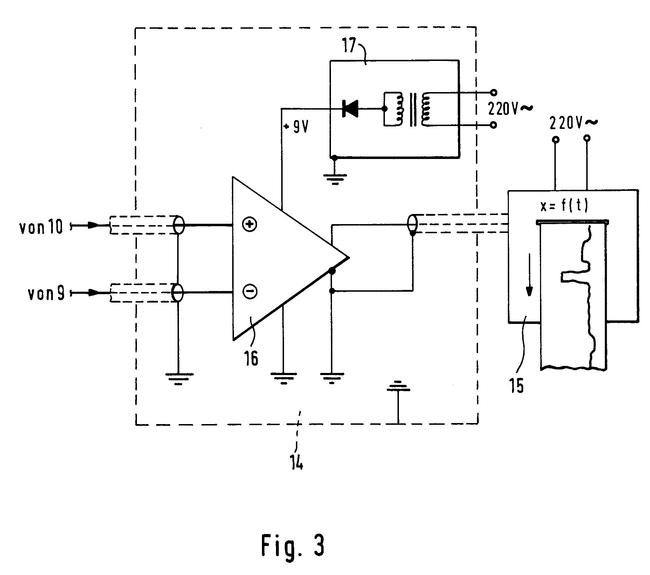

Die Referenz- und die Meßelektrode 9, 10 sind jeweils gleich aufgebaute Glaselektroden, die beispielsweise einen zentralen Anschlußdraht aus Thalium-Amalgam als Elektrode aufweisen. Sowohl die Referenz- als auch die Meßelektrode sind an die beiden Eingänge eines Differenzverstärkers 16 einer Verstärkerschaltung 14 (vgl. Figur 3) angeschlossen, wobei der Ausgang des Differenzverstärkers mit einem Streifenschreiber 15 verbunden ist.

Die auf Masse liegende Metallelektrode 11 stellt den elektrischen Nullpunkt der Meßvorrichtung dar. Dadurch, daß die Abschirmungen 22, 23 der Elektroden 9 und 10 zusammen mit der Metallelektrode 11 auf Masse liegen, ist die Meßvorrichtung vollständig gegen äußere elektromagnetische Störungen durch die Elektrolytlösung 4 und die Metallelektrode 11 abgeschirmt.

In Figur 2 ist schematisch eine zweite Ausführungsform der Meßvorrichtung dargestellt, bei der es sich um eine Meßvorrichtung mit Überführung mit nur einem Diaphragma 19 zwischen der Referenzlösung 20 und der Probenlösung 21 handelt. In Figur 2 sind die Referenzelektrode 9 und die Meßelektrode 10 mittig in der Referenzzelle bzw. der Meßzelle angeordnet. Eine Elektrolytlösung, wie bei der ersten Ausführungsform nach Figur 1, ist nicht vorhanden. Bei 19 handelt es sich um ein Diaphragma, Glasfritte oder um eine poröse Wand, die die beiden unterschiedlichen Elektrolyten, das sind die Referenz- und die Probenlösung, voneinander trennt. Die Metallelektrode 11 aus Platin liegt auf Masse und ragt in den unteren Teil der Referenzzelle hinein. Die beiden Elektroden 9 und 10 sind an einem Voltmeter 18 angeschlossen, das die Differenzspannung zwischen den Elektroden anzeigt, die zugleich ein Maß für die pH-Differenz zwischen der Referenzlösung 20 und der Probenlösung 21 darstellt. Ebenso können die Referenzelektrode 9 und die Meßelektrode 10 an eine Verstärkerschaltung 14 in Verbindung mit einem Streifenschreiber 15 angeschlossen sein, wie sie anhand der Figur 3 beschrieben sind. Die Abschirmungen 22, 23 der beiden Elektroden 9, 10 liegen ebenso wie die Metallelektrode auf Masse.

Figur 3 zeigt schematisch die Verstärkerschaltung 14 und den an die Verstärkerschaltung angeschlossenen Streifenschreiber 15. Die Verstärkerschaltung 14 besteht aus dem Differenzverstärker 16, bei dem es sich um einen hochohmigen und rauscharmen Verstärker handelt, der eine 3 db-Bandbreite von weniger als 1 Hz besitzt. Der Eingangswiderstand des Differenzverstärkers 14 ist um ein Vielfaches höher als der Elektrodenwiderstand der Referenz- und Meßelektrode, von denen jeweils eine mit einem der beiden Eingänge des Differenzverstärkers 16 verbunden ist. Eine Gleichspannungsversorgung 17 liefert die Betriebsspannung für den Differenzverstärker 16. Das Ausgangssignal des Differenzverstärkers 16 gelangt über ein abgeschirmtes Kabel an ein Anzeigeinstrument mit einer Auflösung von kleiner/gleich 10 $\mu$V. Bei diesem Anzeigeinstrument handelt es sich zweckmäßigerweise um den Streifenschreiber 15, der den Verlauf der Potentialdifferenz der Referenz- und der Probenlösung über der Zeit aufzeichnet. Bei Verwendung der Meßzelle nach Fig. 1 ohne Überführung entspricht die gemessene Potentialdifferenz dem nach der Nernstschen Gleichung theoretisch zu erwartenden Wert von 60 $\mu$V/0,001 pH. Die thermische Rauschspannung, verursacht durch den Widerstand der Glaselektroden, deren Innenwiderstand etwa 1 G$\Omega$ ist, soll kleiner als die angestrebte Meßgenauigkeit von 60 $\mu$V sein. Die thermische Rauschspannung der Glaselektroden ergibt sich nach der Formel $U_R = \sqrt{R \cdot k \cdot T \cdot f}$ für R = 1 G$\Omega$, Boltzmann'sche Konstante k = $1,38 \cdot 10^{-23}$ Ws/Grad, T = 298 K, f in Hz zu 2 $\mu$V/$\sqrt{\text{Hz}}$. Die Verstärkerschaltung 14 muß bezüglich ihrer Bandbreite so angelegt sein, daß die Rauschspannung kleiner als die eigentliche Meßgröße ist, d.h. << 60 $\mu$V bzw. 20 $\mu$V ist. Bei der Auslegung der Meßvorrichtungen ist zu berücksichtigen, daß das Potential der Glaselektroden temperaturabhängig ist, so daß zum Beispiel bei einem pH-Wert = 13 der Temperaturgang etwa 0,02 pH/K beträgt. Damit sich diese Temperaturabhängigkeit während der Messung nicht störend bemerkbar macht, ist eine Temperaturkonstanz der Elektrolytlösung 4, die im Thermostaten 13 auf konstanter Temperatur gehalten wird, von besser als 0,05 K erforderlich. Die im allgemeinen bei den pH-Differenzmessungen auftretenden sehr kleinen Potentialdifferenzen betragen bei der ersten Ausführungsform der Meßvorrichtung, d.h. bei einer Messung ohne Überführung, etwa 60 $\mu$V/0,001 pH und bei der zweiten Ausführungsform der Meßvorrichtung, d.h. bei einer Messung mit Überführung, etwa 20 $\mu$V/0,001 pH.

Die Elektrolytlösung 4 ist beispielsweise eine ionische Lösung, deren Konzentration und Art so gewählt sind, daß das Diffusionspotential der gesamten Meßkette bei mehreren, verschieden konzentrierten Proben von Meßlösungen Null oder nahezu Null ist. So kann die Elektrolytlösung 4 aus einer KCl-Lösung mit einer Konzentration im Bereich von 1 Mol/l bis zur Sättigung bestehen. Die Elektrolytlösung aus KCl kann auch zusätzliche Bestandteile der Meßlösung in einer Konzentration enthalten, welche die meßbare Potentialdifferenz zwischen Referenz- und Meßelektrode unempfindlich gegen einen Flüssigkeitsaustausch zwischen Meß-, Referenz- und Elektrolytlösung durch die Diaphragmen hindurch macht.

Mit der Meßvorrichtung ist die $OH^-$-Ionenaktivität von alkalischen Entwicklern für Positiv-Fotoresiste mit einer Genauigkeit gleich/kleiner als 1 %, bezogen auf die Löslichkeit der belichteten Fotoresiststellen durch den Entwickler, bestimmbar. Darüberhinaus ist es möglich, mit der Meßvorrichtung eine Entwicklerlösung mit einem pH-Wert von 12 bis 14 gegen eine Standardentwicklerlösung zu vermessen, wobei die Entwicklerlösung einmal pur und einmal kontaminiert mit $CO_2$ in die Meßzelle 6 eingefüllt wird. Die Potentialdifferenz der beiden Messungen an der puren und der kontaminierten Entwicklerlösung gibt ein Maß für den $CO_2$-Einfluß auf die Entwicklungsgeschwindigkeit an. Diese Meßvorgänge werden nachfolgend anhand von zwei Beispielen beschrieben:

**Beispiel 1:**

Die Elektrolytlösung 4 in der Meßvorrichtung nach Fig. 1 besteht aus einer wäßrigen Lösung von Ammoniumacetat der Konzentration 1,95 Mol/l.

In die Referenzzelle 5 wird eine in der Mikroelektronik übliche Entwicklerlösung für Positiv-Fotoresiste, bestehend aus einer wäßrigen Lösung von 0,27 Mol/l Tetramethylammoniumhydroxid = TMAH eingefüllt.

In die Meßzelle 6 werden nacheinander wäßrige TMAH-Lösungen im Konzentrationsbereich von 0,24 Mol/l bis 0,33 Mol/l eingefüllt. Die jeweilige Potentialdifferenz zwischen der Referenzelektrode 9 und der Meßelektrode 10 wird aufgezeichnet. Wird eine vollständige Dissoziation der starken Base TMAH angenommen, so gilt:

$$[OH^-] = [TMAH]$$

In wäßriger Lösung gilt, mit dem Ionenprodukt Kw des Wassers:

$$[H^+] = Kw/[OH^-]$$
$$= Kw/[TMAH]$$

$\log[H^+] = \log Kw - \log [TMAH]$
mit $pH = - \log [H^+]$

folgt:

$pH = \log [TMAH] - \log Kw.$

Die Steilheit von Glaselektroden beträgt 59,2 mV/pH bei 25 °C nach Nernst. Werden die aus dem Beispiel gewonnenen Werte für die Potentialdifferenz U gegen den Logarithmus der TMAH-Konzentration in der Zelle 6 aufgetragen, so ergibt sich eine Gerade mit der Steigung

$$\frac{U}{\log [TMAH]} = 60,4 \ mV/\log \ [Mol/l].$$

Die Meßgenauigkeit ist so gut, daß die Abweichungen von dieser Geraden weniger als 50 $\mu$V betragen. Durch die gewählte Elektrolytlösung mit dem großen Anion Acetat gegenüber dem höher beweglichen Ammonium-Ion $NH_4^+$ tritt bei der Meßvorrichtung keine "Überführung" auf, d.h. die gemessene Potentialdifferenz wird nicht durch Diffusionspotentiale verringert und entspricht mit guter Genauigkeit dem theoretischen Wert von 59,2 mV/log [Mol/l]. Die Diffusionspotentiale lassen sich nach Henderson (Grundlagen der physikalischen Chemie, 4. Auflage, Brdicka, S. 615-618) berechnen. Für das gewählte Beispiel errechnet sich für den angegebenen Konzentrationsbereich, daß die Summe aller Diffusionspotentiale <40 $\mu$V und damit ohne Bedeutung ist.

Die Meßgenauigkeit von besser als 50 $\mu$V entspricht 0,0008 pH-Einheiten. Bezogen auf die TMAH-Konzentration bedeutet dies eine Genauigkeit von 0,0005 Mol/l. Die Korrelation mit Funktionstests des Entwicklers ergibt eine Genauigkeit der Entwickleraktivität (Entwicklungsrate) von 0,8 %.

Diese gegenüber herkömmlichen pH-Messungen um eine Zehnerpotenz höhere Genauigkeit wird durch die Differenzmessung in der ersten Ausführungsform der Meßvorrichtung erreicht. Dabei tritt eine elektrische und chemische Kompensation der Fehlergrößen durch Gegeneinanderschalten von zwei gleich aufgebauten Zellen bzw. Elektroden ein. Als Restfehler der Messung verbleibt nur noch der "Absolutfehler" bzw. Symmetriefehler. Durch elektrische Abschirmung der Meßvorrichtung bleiben Störungen und Rauschen in der Größenordnung von ca. 20 $\mu$V unterhalb der Meßgenauigkeit.

Als Entwickler aus einer wäßrigen alkalischen Lösung kommen anstelle von Tetramethylammoniumhydroxid auch Natriumhydroxid und Natriumborat oder Natriumphosphat und Natriumsilikat in Frage.

Ebenso können nach dem Verfahren der Erfindung Eich- bzw. Pufferlösungen für die pH-Messung im alkalischen Bereich mit einer Genauigkiet von kleiner/gleich 0,001 pH hergestellt werden.

**Beispiel 2:**

Die Elektrolytlösung in der Meßvorrichtung nach Figur 1 besteht aus einer 3,5 Mol/l KCl-Lösung. In die Referenzzelle 5 wird eine gepufferte Entwicklerlösung, bestehend aus 0,35 Mol/l NaOH und 0,254 Mol/l Borsäure eingefüllt. In die Meßzelle 6 wird einmal dieselbe Lösung, dann dieselbe Lösung kontaminiert mit 0,00020 bis 0,00026 Mol/l $CO_2$, eingefüllt. Die gemessene Potentialdifferenz bei 0,00026 Mol/l $CO_2$ beträgt 90 $\mu$V. Die Übertragung dieses Wertes auf die Entwickleraktivität bedeutet eine Verlangsamung der Entwicklungsrate um 1,3 %. Eine Erfassung derart geringer $CO_2$-Konzentrationen ist derzeit durch Titration nicht möglich. Auch wenn in diesem Fall die angezeigte Potentialdifferenz nur 66 % des theoretischen Wertes beträgt, was auf verbleibende Diffusionspotentiale bei der gewählten Elektrolytlösung zurückzuführen ist, ermöglicht die Meßvorrichtung in allen Fällen eine Messung der Entwickleraktivitäten mit einer Genauigkeit von besser als 1 %.

Mit den Messungen ist es möglich, einfach und schnell die Entwickleraktivität von alkalischen Entwicklern zur Entwicklung von Positiv-Fotoresisten auf der Basis Phenolharz/Naphthochinondiazid durch Messung der $H^+$-Ionenaktivität und der damit gegebenen $OH^-$-Ionenaktivität zu bestimmen. Grundlage hierfür ist die Größenordnung der Abhängigkeit der Entwickleraktivität (Entwicklerabtragsrate) vom pH-Wert der Entwicklerlösung. Die Entwickleraktivität A ist eine Funktion des pH-Wertes, wobei eine Differenz der Entwickleraktivität von 10 % etwa einer pH-Differenz von 0,01 entspricht. Der absolute pH-Wert einer typischen alkalischen Entwicklerlösung liegt im Bereich 12,5 ≤ pH ≤ 13,0. Eine Absolutmessung des pH-Wertes ist in diesem Bereich aus zwei wesentlichen Gründen nicht mit hinreichender Reproduzierbarkeit möglich:

(a) Der "Alkalifehler" von Glaselektroden, vorwiegend durch $Na^+$-Ionen verursacht, beträgt bei guten Glaselektroden etwa 0,05 pH-Einheiten. Dieser Fehler ist, wie schon zuvor erwähnt wurde, nicht kalibrierbar.

(b) pH-Absolutmessungen haben nach dem heutigen Stand der Technik einen inhärenten Meßfehler in der Größenordnung von 0,01 pH-Einheiten.

Durch die erfindungsgemäßen Vorrichtungen werden diese Einflüsse so weit wie möglich ausgeschaltet bzw. kompensiert, da die Meßvorrichtungen eine Differenzmessung der $H^+$-Ionenaktivität der Probenlösungen erlaubt und die Fehler durch die weitgehend symmetrische Anordnung der Referenz- und Meßelektrode kompensiert werden. Bei der ersten Ausführungsform der Meßvorrichtung sind die Elektroden gleich aufgebaut und werden in eine bestimmte Elektrolyt- bzw. Entwicklerlösung eingetaucht. Bei der zweiten Ausführungsform der Meßvorrichtung sind die Meß- und die Referenzzelle beispielsweise über eine Glasfritte leitend miteinander verbunden, tauchen jedoch nicht in eine Elektrolytlösung ein.

**Patentansprüche**

1. Verfahren zur Bestimmung des pH-Wertes von Flüssigkeiten durch eine pH-Differenzmessung an einer Meßlösung, dadurch gekennzeichnet, daß die pH-Differenzmessung mittels Glaselektroden zwischen einem Volumen der Meßlösung und einem Volumen einer Referenzlösung, die eine vergleichbare Zusammensetzung wie die Meßlösung besitzt, vorgenommen wird, daS die Referenzlösung und die Meßlösung über zumindest ein Diaphragma elektrisch miteinander in Verbindung stehen, daß eine auf Masse liegende Metallelektrode den elektrischen Nullpunkt einer Meßvorrichtung bildet und daß die Potentialdifferenz zwischen der Meß- und der Referenzlösung ein Maß für die Differenz der pH-Werte zwischen den beiden Lösungen wiedergibt.

2. Verfahren nach Anspruch 1, dadurch gekennzeichnet, daß die Referenz- und die Meßlösung über je ein Diaphragma mit einer Elektrolytlösung elektrisch in Verbindung stehen, die den elektrischen Nullpunkt der Meßvorrichtung bildet und in die die Metallelektrode eintaucht.

3. Verfahren nach Anspruch 1, dadurch gekennzeichnet, daß die Referenzlösung während der Messung nicht ausgewechselt und die Meßlösung in konstanten Zeitintervallen während der Messung ausgewechselt wird.

4. Verfahren nach Anspruch 1, dadurch gekennzeichnet, daß die Elektrolytlösung auf konstanter Temperatur gehalten wird und die Meßvorrichtung gleichmäßig durchströmt.

5. Verfahren nach Anspruch 1 zur Herstellung von Entwicklern für Positiv-Fotoresiste mit einer Aktivitätskonstanz von besser als 1 %.

6. Verfahren nach Anspruch 1, dadurch gekennzeichnet, daß Eichlösungen für die pH-Messung mit einer Genauigkeit von kleiner/gleich 0,001 pH hergestellt werden.

7. Verfahren nach Anspruch 1, dadurch gekennzeichnet, daß Karbonatgehalte bis herab zu 0,0002 Mol/l in Entwicklern für Positiv-Fotoresiste bestimmbar sind.

8. Vorrichtung zur Bestimmung des pH-Wertes von Flüssigkeiten durch eine pH-Differenzmessung, dadurch gekennzeichnet, daS eine Referenz- (5) und eine Meßzelle (6) über ein Diaphragma (19) elektrisch miteinander verbunden sind, daß jeweils eine Referenzelektrode (9) und eine Meßelektrode (10) in der Referenz- und der Meßzelle angeordnet sind und daS eine auf Masse liegende Metallelektrode (11) in eine Referenzlösung (20) in der Referenzzelle (5) eintaucht.

9. Vorrichtung zur Bestimmung des pH-Wertes von Flüssigkeiten durch eine pH-Differenzmessung, mit einem Außengefäß, das eine Elektrolytlösung enthält, dadurch gekennzeichnet, daß eine Referenzzelle (5) und eine Meßzelle (6) in die Elektrolytlösung (4) eintauchen, daß die Referenz- und die Meßzelle jeweils ein Diaphragma (7 bzw. 8) aufweisen, die den Flüssigkeitsaustausch zwischen den Flüssigkeiten in den Zellen und der Elektrolytlösung (4) verhindern, daS jeweils eine Referenzelektrode (9) und eine Meßelektrode (10) in der Referenz- bzw. Meßzelle angeordnet sind und daß eine Metallelektrode (11), die in die Elektrolytlösung (4) eintaucht, auf Masse liegt.

10. Vorrichtung nach Anspruch 9, dadurch gekennzeichnet, daß das Außengefäß (1) einen Zulauf (2) und einen Ablauf (3) für die Elektrolytlösung (4) aufweist, die mittels einer Pumpe (12) im Kreislauf umgepumpt wird und durch das Außengefäß (1) hindurchströmt und daß im Kreislauf der Elektrolytlösung (4) außerhalb des Außengefäßes (1) ein Thermostat (13) angeordnet ist, durch den die Elektrolytlösung zum Konstanthalten der Temperatur hindurchgeführt ist.

11. Vorrichtung nach Anspruch 8 oder 9, dadurch gekennzeichnet, daß die Abschirmungen der Referenz- und der Meßelektrode (9, 10) gemeinsam mit der Metallelektrode (11) elektrisch auf Masse liegen.

12. Vorrichtung nach Anspruch 9, dadurch gekennzeichnet, daß die Elektrolytlösung (4) eine niederohmige elektrische Abschirmung auf Massepotential für die Referenz- und die Meßzelle (5, 6) bildet.

13. Vorrichtung nach Anspruch 8 oder 9, dadurch gekennzeichnet, daß die Referenz- und die Meßelektrode jeweils gleich aufgebaute Glaselektroden sind, die einen zentralen Anschlußdraht aus Thalium-Amalgam oder Kalomel aufweisen, und daß die Referenz- und Meßelektrode an die beiden Eingänge eines Differenzverstärkers (16) angeschlossen sind, dessen Ausgang mit einem Streifenschreiber (15) verbunden ist.

14. Vorrichtung nach Anspruch 13, dadurch gekennzeichnet, daß der hochohmige und rauscharme Differenzverstärker eine 3 db-Bandbreite von weniger als 100 Hz besitzt und daß das Ausgangssignal des Differenzverstärkers ein Anzeigeinstrument mit einer Auflösung von kleiner/gleich 10 $\mu$V beaufschlagt.

15. Vorrichtung nach Anspruch 12, dadurch gekennzeichnet, daß die Elektrolytlösung (4) aus einer KCl-Lösung, mit einer Konzentration im Bereich von 1 Mol/l bis zur Sättigung, besteht.

16. Vorrichtung nach Anspruch 15, dadurch gekennzeichnet, daß die Elektrolytlösung (4) aus KCl zusätzliche Bestandteile der Meßlösung in einer Konzentration enthält, die die meßbare Potentialdifferenz zwischen Referenz- und Meßelektrode unempfindlich gegen einen Flüssigkeitsaustausch zwischen Meß-, Referenzlösung und Elektrolytlösung durch die Diaphragmen hindurch macht.

17. Vorrichtung nach Anspruch 12, dadurch gekennzeichnet, daß die Elektrolytlösung (4) eine ionische Lösung ist, deren Konzentration und Art so gewählt sind, daß das Diffusionspotential der gesamten Meßreihe aus mehreren Proben von Meßlösungen null oder nahezu null ist.

18. Vorrichtung nach Anspruch 14, dadurch gekennzeichnet, daß der Eingangswiderstand des Differenzverstärkers (16) um ein Vielfaches höher als der Elektrodenwiderstand der Referenz- und Meßelektrode ist und daß die thermische Rauschspannung, verursacht durch den Elektrodenwiderstand, kleiner als die Meßgenauigkeit von 60 $\mu$V ist, die einem pH-Wert von 0,001 entspricht.

19. Vorrichtung nach Anspruch 9, dadurch gekennzeichnet, daß die OH$^-$-Ionen-Aktivität von alkalischen Entwicklern für Positiv-Fotoresiste mit einer Genauigkeit bestimmbar ist, die, bezogen auf die Löslichkeit der belichteten Fotoresiststellen durch den Entwickler, gleich/kleiner als 1 % ist.

20. Vorrichtung nach Anspruch 9, dadurch gekennzeichnet, daß eine Entwicklerlösung mit einem pH-Wert von 12-14 gegen eine Standardentwicklerlösung vermessen wird, wobei die Entwicklerlösung einmal pur und einmal kontaminiert mit $CO_2$ in die Meßzelle (6) eingefüllt ist, und daß die Potentialdifferenz der beiden Messungen an der puren und der kontaminierten Entwicklerlösung ein Maß für den $CO_2$-Einfluß auf die Entwicklungsgeschwindigkeit angibt.

21. Entwickler für Positiv-Fotoresiste mit einer Entwickler-Aktivitätskonstanz von besser als 1 %, bestimmt nach dem Verfahren gemäß Anspruch 5.

22. Entwickler nach Anspruch 21, dadurch gekennzeichnet, daß er aus einer wäßrigen alkalischen Lösung von Tetramethylammoniumhydroxid, Natriumhydroxid und Natriumborat oder aus Natriumphosphat und Natriumsilikat besteht.

23. Eichlösung für die pH-Messung im alkalischen Bereich mit einer Genauigkeit von kleiner/gleich 0,001 pH, bestimmt nach dem Verfahren nach Anspruch 6.

Fig.1

Fig.2

Fig. 3

## EINSCHLÄGIGE DOKUMENTE

EP 91115220.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 5) |
|---|---|---|---|
| X | US - A - 3 862 895 (KING) * Kurzfassung; Fig. 3,4; Spalte 2, Zeile 44 - Spalte 6, Zeile 42 * | 1,8,3 | G 01 N 27/416 G 03 F 7/32 |
| Y | | 2-4,9, 10 | |
| A | | 14,18 | |
| | -- | | |
| Y | DD - A - 22 627 (ROSENBACH) * Gesamt * | 2-4,9, 10 | |
| A | | 12,15-17 | |
| | -- | | |
| A | AT - B - 316 901 (AMMER) * Fig.; Seite 5, Zeile 41 - Seite 6, Zeile 4 * | 1-13 | |
| | -- | | |
| A | DD - A1 - 226 080 (FORSCHUNGSINSTITUT MEINSBERG) * Fig.; Ansprüche * | 1-13 | |
| | -- | | |

**RECHERCHIERTE SACHGEBIETE (Int. Cl. 5)**

G 01 N

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Patentansprüche: 1-4,8-18 Verfahren und Vorrichtung zur Bestimmung des pH Wertes von Flüssigkeiten

2. Patentansprüche: 5,21,22 Entwickler für Positiv-Fotoresiste

3. Patentansprüche: 6,23 Eichlösung für die pH Messung

4. Patentansprüche: 7,19,20 Verwendung von pH Messungen zur Analyse von Entwicklern für Positiv- Fotoresiste

Der vorliegende europäische Teilrecherchenbericht wurde für die Teile der Anmeldung erstellt, die sich auf die zuerst in den Patentansprüchen erwähnte Erfindung beziehen.

| Recherchenort | Abschlußdatum der Recherche | Prüfer |
|---|---|---|
| WIEN | 13-11-1991 | NARDAI |

| Europäisches Patentamt | **EUROPÄISCHER TEILRECHERCHENBERICHT** |
|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>EP - A1 - 0 068 025</u><br>(SHIMADZU)<br>   * Kurzfassung; Fig. 21 *<br>    ---- | 11 |

KLASSIFIKATION DER ANMELDUNG (Int. Cl. M. 5

RECHERCHIERTE SACHGEBIETE (Int. Cl. M. 5